# EUROPEAN PATENT APPLICATION

(11) **EP 4 738 477 A1**
(43) Date of publication of application: **06.05.2026**
(21) Application number: 24898074.0
(22) Date of filing: 26.11.2024
(51) Int. Cl.: H01M 4/66, H01M 10/052, H01M 4/02

(54) **NEGATIVE ELECTRODE FOR LITHIUM-FREE SECONDARY BATTERY, MANUFACTURING METHOD THEREFOR, AND LITHIUM-FREE SECONDARY BATTERY COMPRISING SAME**

(30) Priority: 28.11.2023 KR 20230168063; 20.11.2024 KR 20240165866
(71) Applicant: LG Energy Solution, Ltd., Seoul 07335 (KR); Korea Advanced Institute of Science and Technology, Daejeon 34141 (KR)
(72) Inventor: KIM, Sanha, Daejeon 34141 (KR); YANG, Inyeong, Daejeon 34141 (KR); WON, Dongyeon, Daejeon 34122 (KR)
(74) Representative: Hoffmann Eitle
(86) International application number: PCT/KR2024/018856
(87) International publication number: WO 2025/116480

(57) **Abstract**

The present disclosure relates to a negative electrode for lithium-free secondary battery that can reduce side reactions on the negative electrode and improve the electrochemical characteristics and lifetime characteristics of a lithium-free secondary battery even while achieving reduction in weight and thickness, a preparation method thereof, and a lithium-free secondary battery comprising the same.

## Description

### [TECHNICAL FIELD]

### Cross-Reference to Related Application(s)

This application claims priority to and the benefit of Korean Patent Application no. KR10-2023-0168063, filed on November 28, 2023 and Korean Patent Application no. KR10-2024-0165866, filed on November 20, 2024, the entire contents of which are incorporated herein by reference.

The present disclosure relates to a negative electrode for lithium-free secondary battery that can reduce side reactions on the negative electrode, and can improve the electrochemical characteristics and lifetime characteristics of a lithium-free secondary battery, even while achieving reduction in thickness and weight, a preparation method thereof, and a lithium-free secondary battery comprising the same.

### [BACKGROUND ART]

Lithium metal battery is a battery to which a negative electrode active material made from lithium metal (Li-metal) material is applied, and has the advantage of having a theoretically very high energy density and capacity as compared with a battery to which a graphite-based negative electrode is applied according to the prior art. Thus, research and development are ongoing to apply such a lithium metal battery to a battery that requires a high energy density.

However, lithium metal batteries still have problems such as high side reactions and low reversibility that are not settled yet. Therefore, in order to compensate for the low reversibility of lithium metal batteries, attempts have been made to store excessive lithium in the negative electrode in advance and operate the lithium metal battery. However, as the N/P ratio of the secondary battery increases, the energy density of the lithium metal battery may decrease significantly, and cost and safety problems arise due to the excessive lithium, so these attempts have run up against limitations.

Recently, there is a growing interest in a negative electrode-free secondary battery, also known as a lithium-free secondary battery or an anode-free secondary battery. This lithium-free secondary battery refers to a secondary battery that does not form a separate lithium metal layer on the negative electrode current collector during the preparation process, but includes the negative electrode current collector itself as the negative electrode. The lithium-free secondary battery can be defined as a battery that utilize lithium metal as the negative electrode active material, since lithium metal is electrodeposited on the negative electrode current collector at the time of charge. The lithium-free secondary battery can maximize the use of the high energy density of lithium metal while reducing safety issues caused by an excessive amount of lithium storage.

However, in the case of such a negative electrode for lithium-free secondary battery, since the negative electrode current collector is not completely covered by a lithium metal layer and only a limited amount of lithium metal is utilized as the negative electrode active material, many side reactions including galvanic corrosion and rapid capacity loss may occur in the negative electrode. In addition, the negative electrode may exhibit problems in that lithium metal is unevenly deposited and grown on the negative electrode current collector, resulting in the formation of lithium dendrites.

Previously, in order to induce uniform growth of lithium on the negative electrode current collector and suppress the formation of lithium dendrites, the method of expanding the surface area of the negative electrode by forming a three-dimensional porous microstructure on the negative electrode current collector has been studied.

However, most existing negative electrodes for lithium-free secondary batteries inevitably had a large thickness and weight in order to form a three-dimensional porous microstructure on the metal current collector. For this reason, when applied to such a negative electrode for lithium-free secondary battery, there is a drawback in that the energy density per volume of the battery was greatly reduced.

In addition, there still exist the drawbacks in that due to the large surface area of the negative electrode, side reactions between the current collector and the lithium metal and electrolyte electrodeposited at the time of charge may be further increased, which may significantly reduce the initial capacity of the secondary battery, and accelerates galvanic corrosion, and deteriorates lifetime characteristics of the secondary battery.

### [DETAILED DESCRIPTION OF THE INVENTION]

### [Technical Problem]

Therefore, it is an object of the present disclosure to provide a negative electrode for lithium-free secondary battery that can reduce galvanic corrosions and side reactions on the negative electrode and enables uniform electrodeposition of a lithium metal, even while achieving reduction in thickness and weight, and a preparation method thereof.

It is another object of the present disclosure to provide a lithium-free secondary battery that comprises the negative electrode and thus exhibits improved safety, electrochemical properties and lifetime characteristics.

### [Technical Solution]

According to certain aspects of the present disclosure, there is provided a negative electrode for lithium-free secondary battery, comprising: a porous metal layer having a three-dimensional microstructure; and a conductive carbon nanostructure formed on the porous metal layer,
wherein the porous metal layer comprises a metal mesh layer in which a fibrous metal having a diameter of a micron (µm) scale forms a network structure, and a metal nanostructure formed on the fibrous metal, and
wherein at least some of the metal nanostructures are connected to each other to define a plurality of pores on the porous metal layer.

In the above-mentioned negative electrode, the metal nanostructure may comprise a metal nanorod or a metal nanofiber, and the conductive carbon nanostructure may comprise a carbon nanotube.

According to certain embodiments, the porous metal layer may have a thickness 10 to 30 µm, and may have a mass per unit area of 4.0 to 10.0 mg/cm². In addition, the porous metal layer may have a porosity of 55 to 70%.

According to certain aspects of the present disclosure, there is provided a method for preparing the negative electrode for lithium-free secondary battery of certain embodiments, the method comprising the steps of: performing an electrochemical etching on a metal mesh containing a conductive metal; re-depositing the conductive metal on the metal mesh on which the electrochemical etching has been performed, thereby forming a porous metal layer in which a metal nanostructure is formed on a fibrous metal having a network structure; and forming a carbon nanostructure while supplying a gaseous carbon source including an aliphatic hydrocarbon and a reducing gas in the presence of a metal catalyst.

In the preparation method of certain embodiments, the electrochemical etching step and the re-deposition step of the conductive metal may be sequentially performed in-situ in the same electrolytic cell, comprising: a working electrode containing the metal mesh, a counter electrode containing the same conductive metal as the metal mesh, and an electrolyte containing ions of the conductive metal and an acid.

Furthermore, the preparation method of certain embodiments may further comprise a step of heat-treating the metal mesh or porous metal layer in the presence of hydrogen gas before the electrochemical etching step or after the re-deposition step of the conductive metal.

According to further additional aspects of the present disclosure, there is provided a lithium-free secondary battery comprising: a positive electrode containing a positive electrode active material; the negative electrode of certain embodiments; and a separator or electrolyte layer interposed between the positive electrode and the negative electrode.

According to certain embodiments, such lithium-free secondary battery is a battery in which a lithium metal layer is electrodeposited on the porous metal layer of the negative electrode during the charging process, thereby acting as a negative electrode active material.

### [Advantageous Effects]

A negative electrode for a lithium-free secondary battery of certain embodiments includes a porous metal layer formed through an electrochemical etching on a metal mesh containing a conductive metal and re-deposition of a conductive metal, and a carbon nanostructure on the porous metal layer.

As a result of various experiments by the present inventors, it has been found that the porous metal layer of the negative electrode can have a developed three-dimensional porous microstructure and a relatively large porosity suitable for uniform electrodeposition of lithium, even while having a relatively thin thickness and a small mass per unit area.

In addition, in the negative electrode of certain embodiments, carbon nanostructures such as carbon nanotubes can be formed on the porous metal layer. Such carbon nanostructures can exhibit low reactivity and lithiophobicity for lithium metal. Due to the formation of such carbon nanostructures, lithium metal can be more uniformly electrodeposited within the porous metal layer, and lithium metal can be suppressed from growing unevenly outside the porous metal layer to form lithium dendrites, etc.

Therefore, by applying the negative electrode of certain embodiments to a lithium-free secondary battery, it is possible to significantly reduce galvanic corrosions and side reactions on the negative electrode, even while achieving reduction in weight and thickness of the negative electrode. Furthermore, it is possible to induce uniform lithium electrodeposition on the negative electrode and suppress the growth of lithium dendrites, etc., thereby contributing to providing a lithium-free secondary battery that exhibits high energy density and improved electrochemical properties and lifetime characteristics.

### [BRIEF DESCRIPTION OF THE DRAWING]

FIG. 1 is a schematic diagram showing the configuration of a negative electrode for lithium-free secondary battery according to certain embodiments of the disclosure.
FIG. 2 is a schematic diagram showing the cross-sectional shape of a negative electrode for lithium-free secondary battery according to certain embodiments of the disclosure.
FIG. 3a is a schematic diagram showing each step of a preparation method of a negative electrode for lithium-free secondary battery according to some other embodiments of the disclosure.
FIG. 3b is a schematic diagram showing the change mode of the object before and after each preparation step of FIG. 3a and an electron microscope photograph of an example of the object.
FIG. 4 is an electron microscope photograph of a porous copper layer formed in the preparation process of the negative electrodes of Examples 1 to 6.
FIG. 5 is an electron microscope photograph of a porous copper layer formed in the preparation process of the negative electrodes of Examples 7 to 9.
FIG. 6 shows the results of XRD analysis of the porous copper layers of Examples 1, 4, 7 to 9.
FIG. 7 shows the results of evaluating the change mode of the current density over time by performing galvanostatic charge-discharge test for the half cells manufactured using the negative electrodes of Comparative Example 1, Comparative Example 2, and Example 4.
FIG. 8 shows the results of evaluating the change mode of the discharge capacity over time by conducting charge-discharge tests for cells manufactured using the negative electrodes of Comparative Example 1, Examples 4 and 8.

### [DETAILED DESCRIPTION OF THE EMBODIMENTS]

Throughout the descriptions herein, when a certain part "includes" a component, this does not indicate that the certain part excludes other components, but indicates that the part may further include other components, unless otherwise defined.

Throughout the descriptions herein, the term "about or approximately" or "substantially" used herein is intended to have meanings close to numerical values or ranges specified with an allowable error and intended to prevent accurate or absolute numerical values disclosed for understanding of the present disclosure from being illegally or unfairly used by any unconscionable third party. For example, when the porous metal layer of the negative electrode of certain embodiments is "substantially" free of a conductive metal oxide, this means that, taking into consideration the detectable limits of analytical instruments such as XRD, when the components of the porous metal layer are analyzed using the analytical instrument, the oxide of the conductive metal is not detected at a level equal to or higher than the noise of the analytical result, and can be interpreted as including cases where the oxides are detected at the noise level of the analytical results.

Throughout the descriptions herein, the term "step of" as used herein does not mean "step for~".

Throughout the descriptions herein, terms expressing a scale such as the "diameter" or "thickness" of a certain component can be interpreted as meaning the "maximum diameter" or "maximum thickness" etc., of the corresponding component. For example, the "diameter" range of a metal nanostructure, such as a metal fiber, metal nanorod, or metal nanofiber, included in the porous metal layer of the negative electrode of certain embodiments can be defined as the range for the "maximum diameter" of the thickest portion of a single strand of the nanorod or (nano)fiber.

In addition, it will be understood that when an element such as a layer, film, region, or plate is referred to as being "on" or "above" another element, it can be directly on the other element or intervening elements may also be present. In addition, an element such a film, region, plate, etc., which is disposed "on" the other element, may exist such that a part of its region overlaps a part of the other element in the thickness direction.

Through the description herein, the term "lithium-free secondary battery" may refer to a secondary battery in which a separate negative electrode active material layer such as a separate lithium metal layer or a lithium alloy layer does not exist on the negative electrode or the negative electrode current collector (e.g., negative electrode of certain embodiments including a conductive metal layer such as copper, a porous metal layer, and a carbon nanostructure) in the state before charge or discharge, for example, in the state just after the preparation. Therefore, the term "lithium-free secondary battery" can be defined as not including a separate negative electrode active material layer (e.g., lithium metal layer, etc.) on the negative electrode or negative electrode current collector in the state before charge and discharge. However, it goes without saying that the addition of a separate insulating layer or functional layer other than the negative electrode active material layer is not limited. In addition, the term "lithium-free secondary battery" cannot be interpreted as limiting the presence of a lithium-containing positive electrode active material, or limiting the presence of a lithium metal layer or lithium-containing compound electrodeposited on the negative electrode according to the charging and discharging.

Based on the definitions as described above, certain embodiments of the present disclosure will be described in detail below with reference to the accompanying drawings. However, these embodiments are presented for illustrative purposes only, and the scope of the present disclosure is not limited thereto, and the present disclosure is only defined by the scope of the claims described hereinafter.

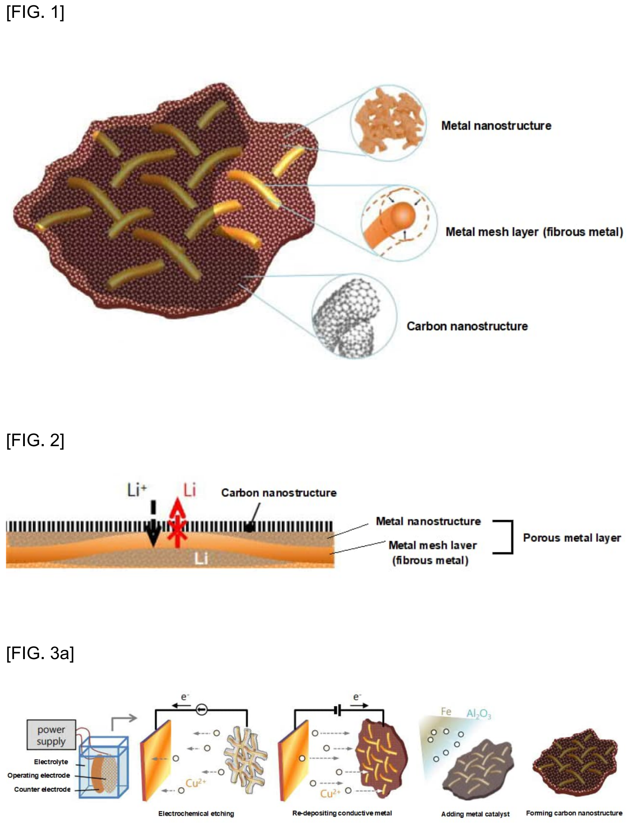

FIG. 1 is a schematic diagram showing the configuration of a negative electrode for lithium-free secondary battery according to certain embodiments of the disclosure. FIG. 2 is a schematic diagram showing the cross-sectional shape of a negative electrode for lithium-free secondary battery according to certain embodiments of the disclosure.

As shown in FIGS. 1 and 2, a negative electrode for lithium-free secondary battery according to certain embodiments of the disclosure comprises a porous metal layer having a three-dimensional microstructure; and a conductive carbon nanostructure formed on the porous metal layer,
wherein the porous metal layer comprises a metal mesh layer in which a fibrous metal having a diameter of a micron (µm) scale forms a network structure, and a metal nanostructure formed on the fibrous metal, and wherein at least some of the metal nanostructures are connected to each other to define a plurality of pores on the porous metal layer.

The negative electrode of certain embodiments includes, for example, a porous metal layer formed through the electrochemical etching of a metal mesh layer containing a conductive metal and re-deposition of a conductive metal, and carbon nanostructures on the porous metal layer, as described in more detail below.

In the electrochemical etching and re-deposition process, the conductive metal contained in the metal mesh layer is etched to reduce the diameter of the fibrous metal, while as the conductive metal is re-deposited on the fibrous metal, metal nanostructures having a shape such as, for example, metal nanorods or metal nanofibers having nanoscale diameters are formed and grown on the metal mesh layer. At least some of these metal nanostructures are connected to each other and define fine pores on the porous metal layer. In particular, as confirmed in the embodiments below, through the preparation process, the porous metal layer can have a three-dimensional microstructure including a plurality of pores defined by the metal nanostructures while having a thinner thickness and smaller mass per unit area than previously known negative electrodes for lithium-free secondary batteries (or negative electrode current collectors).

Therefore, the negative electrode of certain embodiments can be made thinner and lighter than the existing negative electrode for lithium-free secondary batteries, and also lithium metal can be uniformly electrodeposited within the three-dimensional porous microstructure at the time of charge of the battery. The negative electrode can suppress the formation of lithium dendrites, etc. due to the non-uniform growth of lithium metal outside the negative electrode, or the occurrence of side reactions between the negative electrode and the electrolyte, or galvanic corrosion of the negative electrode.

In addition, in the negative electrode of certain embodiments, carbon nanostructures such as carbon nanotubes may be formed on the porous metal layer. Such carbon nanostructures may exhibit low reactivity and lithiophobicity for lithium metal. Due to the formation of such carbon nanostructures, lithium metal may be more uniformly electrodeposited within the porous metal layer, and the degree of aggregation of such lithium metal can be controlled to an appropriate size. Therefore, it is possible to suppress lithium metal from growing unevenly outside the porous metal layer to form lithium dendrites, etc., and to suppress volumetric changes in the negative electrode during the operation of the battery.

Meanwhile, the negative electrode for lithium-free secondary battery according to certain embodiments may include the porous metal layer as a substrate, and optionally, may further include a conductive metal layer supporting the porous metal layer. At this time, the porous metal layer and optionally the conductive metal layer supporting it may be formed using any conductive metal that does not cause chemical change in the lithium-free secondary battery and has high conductivity even while having relatively low reactivity, and may be formed using any conductive metal that has been previously known to be usable as a negative electrode current collector.

Specific examples thereof include metals such as stainless steel, aluminum, nickel, titanium, or copper, or copper, aluminum or stainless steel whose surface is treated with carbon, nickel, titanium, silver, etc., and the like. However, taking into consideration the excellent conductivity and light weight of the negative electrode of certain embodiments, and the ease of manufacturing the porous metal layer, the porous metal layer, etc. may include copper.

Meanwhile, the porous metal layer may have a thickness of 10 to 30µm, or 12 to 25µm, or 14 to 20µm, and a mass per unit area of 4.0 to 10.0 mg/cm², or 4.5 to 9.0 mg/cm², or 5.0 to 8.0 mg/cm². As already described above, the porous metal layer included in the negative electrode of certain embodiments can have a porous three-dimensional microstructure developed by the metal fibers included in the porous metal layer and the metal nanostructures grown therefrom, even while having such a thin thickness and small mass per unit area. In this way, since lithium metal may be uniformly electrodeposited within the pores of the thinned and lightweight three-dimensional microstructure to suppress the formation of lithium dendrites and the like, a lithium-free secondary battery having higher energy density and capacity can be provided.

In such a porous metal layer, the fibrous metal may have a diameter of a micron (µm) scale, for example, a diameter of 5 to 15µm, or 7 to 13µm, or 8 to 12µm, based on a single-stranded fiber, and can be formed into a network structure such that the distance between opposing fibrous metals is 30 to 80µm, or 40 to 75µm, or 50 to 70µm, thereby forming a metal mesh layer. Further, the metal nanostructures in the shape of metal nanorods or metal nanofibers formed on the fibrous metal may have a diameter of 100 to 700 nm, or 150 to 650 nm, or 200 to 550 nm, respectively.

The metal nanostructures grown on the fibrous metal can be connected or entangled with each other to define a plurality of open pores in the porous metal layer, and lithium metal can be uniformly electrodeposited into these pores at the time of charge of a lithium-free secondary battery. At this time, the porous metal layer may have a porosity of, for example, 55 to 70%, or 56 to 67%, or 57 to 63%. If the porosity is higher than this, lithium electrodeposition may become uneven or lithium may aggregate unevenly within the negative electrode, which may increase the risk of lithium metal desorption, lithium dendrite formation, or side reactions. On the contrary, if the porosity is excessively low, lithium electrodeposition may not be performed properly, so that lithium may grow unevenly outside the negative electrode, causing an increase in the volume of the negative electrode, which may deteriorate the characteristics of the secondary battery.

Meanwhile, in the negative electrode of certain embodiments, the porous metal layer may be made from a conductive metal such as copper, and more specifically, may be made from a conductive metal in a reduced form. Here, being made of the conductive metal in a reduced form may mean that the porous metal layer is substantially free of an oxide of a conductive metal such as, for example, copper oxide (CuₓO). More specifically, when the porous metal layer is analyzed by XRD, a peak derived from copper oxide, for example, a peak detected at 2θ of 60°~63°, may not be detected with an intensity equal to or greater than noise.

As will be described in more detail below, during the preparation process of the negative electrode of certain embodiments, the porous metal layer or the metal mesh which is the raw material thereof may be heat-treated under a reducing atmosphere (hydrogen atmosphere), for example, at a high temperature of 300°C or more or 500°C or more. The porous metal layer that has undergone such heat treatment is substantially free of a conductive metal oxide such as copper oxide, and the porous metal layer may be formed of a reduced form of a conductive metal (e.g., reduced copper itself). In addition, in the heat treatment process, some of the metal nanostructures may be aggregated to adjust their diameters, and the size of the pores defined between the metal nanostructures may also be adjusted. As a result, the lithium metal may be more uniformly electrodeposited on the negative electrode of certain embodiments, and the conductivity of the negative electrode may also be improved. Further, since the porous metal layer is substantially free of conductive metal oxides, galvanic corrosion or side reactions of the negative electrode may be suppressed.

Meanwhile, in the negative electrode of certain embodiments, a conductive carbon nanostructure made from carbon nanotubes or carbon nanofibers can be formed on the porous metal layer, for example, the metal mesh layer containing the fibrous metal. As already described above, due to the lithium lithiophobicity of the carbon nanostructures, lithium metal can be more uniformly electrodeposited within the porous metal layer, and such lithium metal growth outside the negative electrode and the growth of lithium dendrites can be inhibited. Further, due to the low reactivity of the carbon nanotubes, etc., side reactions between the negative electrode of certain embodiments, the electrodeposited lithium metal layer, and the electrolyte can be further reduced, and the negative electrode can exhibit more improved electrochemical characteristics.

Such conductive carbon nanostructures, such as carbon nanotubes, can be directly synthesized and grown on the porous metal layer during the preparation process of the negative electrode. For this purpose, a metal catalyst for synthesizing carbon nanotubes, such as aluminum oxide and iron, is applied in a thin thickness onto the porous metal layer, and a gaseous carbon source is applied onto the metal catalyst layer to synthesize carbon nanotubes, etc.

In the negative electrode of certain embodiments, for example, a catalyst layer containing aluminum, iron or ions thereof derived from the metal catalyst is further formed on the porous metal layer, and a conductive carbon nanostructure such as a carbon nanotube may be formed on the catalyst layer. In this case, the catalyst layer may have a thickness of, for example, 10 to 50 nm or 15 to 30 nm. Due to this configuration, the conductive carbon nanostructure can be uniformly formed in a thin thickness near the surface of the porous metal layer. Thereby, a lithium metal layer can be electrodeposited more uniformly and to an appropriate size on the negative electrode.

Meanwhile, according to certain embodiments of the disclosure, a method for preparing the negative electrode of some embodiment described above is provided. The method for preparing the negative electrode may comprise, for example, a step of performing an electrochemical etching on a metal mesh including a conductive metal; a step of re-depositing the conductive metal on the metal mesh on which the electrochemical etching has been performed, thereby forming a porous metal layer in which a metal nanostructure is formed on a fibrous metal having a network structure; and a step of forming a carbon nanostructure while supplying a gaseous carbon source including an aliphatic hydrocarbon and a reducing gas in the presence of a metal catalyst.

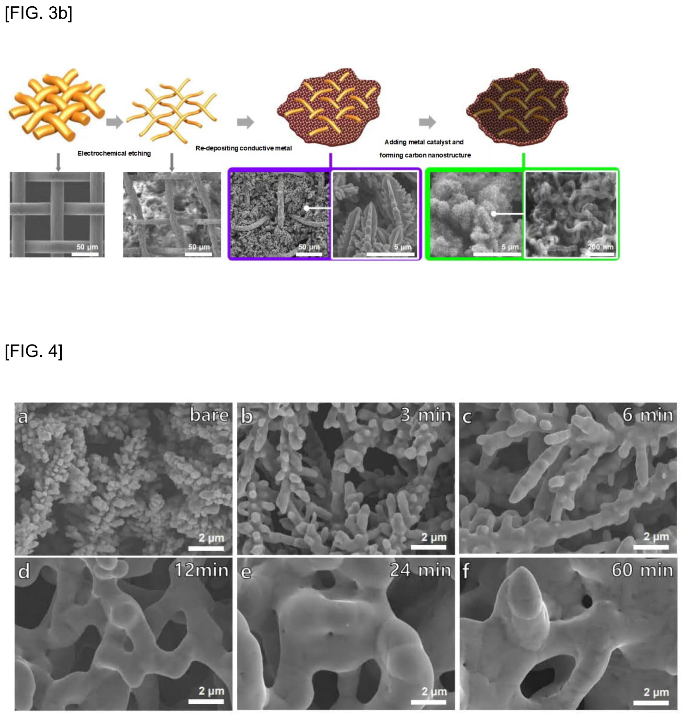

FIG. 3a is a schematic diagram showing each step of a method for preparing a negative electrode for lithium-free secondary battery according to certain embodiments of the present disclosure. FIG. 3b is a schematic diagram showing the change mode of the object before and after each preparation step, while the bottom thereof shows an example of an electron microscope photograph showing the change mode of the object.

Referring to FIGS. 3a and 3b, in the preparation method, for example, a metal mesh containing a conductive metal such as copper is used to perform electrochemical etching and re-deposition of the conductive metal. Therefore, as the conductive metal is etched and then re-deposited on the fibrous metal of the metal mesh, a plurality of metal nanostructures, for example, bundles of metal nanorods or metal nanofibers, may be grown and formed on the fibrous metal. Such metal nanostructures may be at least partially connected to define a plurality of pores, which may form the porous metal layer of the negative electrode of certain embodiments.

Subsequently, a metal catalyst containing, for example, aluminum oxide and iron is added onto the porous metal layer, while heat treatment is performed while supplying a gaseous carbon source containing an aliphatic hydrocarbon and a reducing gas onto the metal catalyst, so that the synthesis and growth of carbon nanostructures such as carbon nanotubes can proceed. Thereby, a negative electrode of certain embodiments can be prepared including a developed three-dimensional porous microstructure and a carbon nanostructure even while achieving reduction in thickness and weight.

Meanwhile, in this preparation method, the metal mesh used as the raw material may be a commercially available conductive metal mesh having an appropriate mesh size and scale, taking into consideration the porosity, thickness, and the like of the porous metal layer to be finally prepared. In specific embodiments, the metal mesh may include a metal wire (or fibrous metal) having a diameter of 20 to 40µm, or 22 to 35µm, or 23 to 30µm, and may be a mesh in which the metal wires form a network structure so as to have an mesh size of 200 to 500 mesh, or 300 to 400 mesh. Thereby, a negative electrode of certain embodiments having an appropriate porosity and a porous three-dimensional microstructure may be formed.

In addition, as shown in the first diagram of FIG. 3a, the electrochemical etching step and the re-deposition step of the conductive metal may be sequentially performed in the same electrolytic cell. In more specific embodiments, the electrochemical etching step and the re-deposition step of the conductive metal may proceed in the same electrolytic cell including a working electrode containing the metal mesh, a counter electrode containing the same conductive metal as the metal mesh, for example, a conductive metal sheet such as copper foil, and an electrolyte containing ions of the conductive metal and an acid.

In this case, the electrolyte may include, for example, copper ions and sulfuric acid. According to more specific embodiments, the electrolyte may be an aqueous electrolyte containing copper sulfate (CuSO₄) and sulfuric acid. According to certain embodiments, the electrolyte may be an aqueous electrolyte including copper sulfate (CuSO₄) at a concentration of 20 to 100 mM, or 30 to 80 mM, and sulfuric acid at a concentration of 100 to 300 mM, or 150 to 250 mM. If the concentration of the sulfuric acid or the like is too low, the re-deposition of the conductive metal such as copper may not be uniformly performed.

Furthermore, in the preparation method of certain embodiments, the electrochemical etching step may be performed as a constant current etching under application of a constant current at a current density of 30 to 60 mA/cm², or 35 to 55 mA/cm². If the current density is too low, the conductive metal may not be properly etched from the metal mesh, and if the current density is too high, the conductive metal may be etched unevenly, so that the three-dimensional microstructure of the porous metal layer in the finally formed negative electrode may be collapsed.

Meanwhile, in the electrochemical etching step, the etched conductive metal ions, for example, copper ions, move to the counter electrode, which serves as a source of conductive metal in the re-deposition step of the conductive metal. In this re-deposition step, the ions of the conductive metal move from the counter electrode to the working electrode, and are deposited on the metal wire (fibrous metal) of the metal mesh, thereby forming a metal nanostructure of a metal nanorod or a metal nanofiber.

This re-deposition step can be performed under application of a voltage of 2.2 V to 2.7 V, or 2.3 V to 2.5 V. In this case, if the applied voltage is too low, it may be difficult to uniformly deposit the conductive metal on a large-area metal mesh layer.

Meanwhile, the preparation method of certain embodiments described above may further comprise a step of heat-treating the metal mesh or porous metal layer at 300°C or more under a reducing gas atmosphere (for example, in the presence of hydrogen gas) before the electrochemical etching step or after the re-deposition step of the conductive metal. In specific embodiments, the heat treatment may be performed on the porous metal layer after the re-deposition step.

As a result of this heat treatment, the oxide of the conductive metal remaining on the porous metal layer can be reduced, and the porous metal layer can be formed of the conductive metal in a reduced form and can be substantially free of the oxide of the conductive metal. Therefore, the porous metal layer and the negative electrode including the same can exhibit improved conductivity and low resistance.

In addition, as the heat treatment is performed under an appropriate temperature and time, some of the metal nanostructures formed on the porous metal layer may be aggregated, and the distribution and size of the pores defined between them may be adjusted. Therefore, lithium metal may be more uniformly deposited on the negative electrode of certain embodiments, and the formation of lithium dendrites may be suppressed.

The heat treatment step may be performed at a temperature of 300°C or more for 5 minutes or more to reduce the oxide of the conductive metal, and the heat treatment step may be more preferably performed at a temperature of 500°C or more to optimize the pore distribution and size for proper aggregation of the metal nanostructures and uniform electrodeposition of lithium metal. In addition, if the heat treatment temperature is too high or the heat treatment time is too long, the metal nanostructure may be excessively aggregated and the pore size, etc. may be excessively reduced, so that the heat treatment step may be performed at a temperature of 300 to 800°C, or 500 to 800°C, for 5 minutes to 1.5 hours.

Meanwhile, the heat treatment step may be continuously performed in the same reactor as the subsequent carbon nanostructure formation step. For this continuous process, the heat treatment may be performed at a temperature of 600 to 800°C for 5 to 20 minutes, and then the subsequent carbon nanostructure synthesis process may also be continuously performed in the same reactor.

Meanwhile, after the re-deposition step of the conductive metal or the step of selective heat treatment, for example, a metal catalyst containing aluminum oxide and iron is added onto the porous metal layer, while heat treatment is performed while supplying a gaseous carbon source including an aliphatic hydrocarbon and a reducing gas in the presence of the metal catalyst, thereby synthesizing carbon nanostructures such as carbon nanotubes. Thereby, the carbon nanostructures can be grown on the porous metal layer, more specifically, the metal mesh layer and the metal nano precursor, thereby preparing a negative electrode of certain embodiments.

In this case, the gaseous carbon source may include, for example, an aliphatic hydrocarbon having a carbon number from 1 to 5, for example, ethylene gas, and the reducing gas may include hydrogen gas. In addition, the metal catalyst containing aluminum oxide and iron may be added with the aluminum oxide to a thickness of 10 to 25 nm, while may be added with the iron to a thickness of 1 to 5 nm. If the thickness of the metal catalyst is too thin, the metal catalyst may be contaminated by diffusion of a conductive metal such as copper, or carbon nanostructures such as carbon nanotubes may not be formed sufficiently. Further, the metal catalyst containing aluminum oxide and iron may be deposited on the porous metal layer under E-beam irradiation state.

In addition, the heat treatment process for synthesizing the carbon nanostructure can be performed at a temperature of 600 to 800°C for 5 to 20 minutes, or 10 to 20 minutes, according to the synthesis conditions of general carbon nanotubes, etc., so that the carbon nano precursor can be grown sufficiently.

Meanwhile, according to further additional aspects of the disclosure, a lithium-free secondary battery comprising the negative electrode of certain embodiments is provided. Such a lithium-free secondary battery may comprise, for example, the negative electrode of certain embodiments; a positive electrode facing the negative electrode and including a positive electrode active material; and a separator or electrolyte layer interposed between the positive electrode and the negative electrode. In addition, the lithium-free secondary battery may further include an electrolyte including a lithium salt and a non-aqueous organic solvent together with the separator.

In such a lithium-free secondary battery, the negative electrode does not include a separate negative electrode active material layer such as a lithium metal layer before charge and discharge. However, as the lithium-free secondary battery is charged and discharged, lithium ions moved from the positive electrode may be electrodeposited on the porous metal layer of the negative electrode to form a lithium metal layer or a lithium alloy layer, and the lithium metal layer may act as a negative electrode active material.

Meanwhile, in the lithium-free secondary battery of further embodiments, the positive electrode may include a positive electrode current collector, and a positive electrode active material layer located on the positive electrode current collector.

The positive electrode may be prepared by mixing an active material and a binder, and optionally, a conductive material, a filler, etc. in a solvent to prepare a positive electrode slurry composition, and coating the composition onto the positive electrode current collector.

The positive electrode current collector may generally have a thickness of 3 to 500µm. The positive electrode current collector is not particularly limited as long as it has high conductivity without causing any chemical change in the battery, and for example, stainless steel, aluminum, nickel, titanium, fired carbon, or aluminum or stainless steel whose surface is treated with carbon, nickel, titanium, silver, or the like may be used. The current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

Further, the positive electrode active material is a compound capable of reversible intercalation and deintercalation of lithium, and specifically, it may include a lithium metal oxide including lithium and at least one metal such as iron, cobalt, manganese, nickel, or aluminum.

More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where, 0 < Z < 2), etc.), lithium-nickel-cobalt-based oxide (e.g., LiNi_{1-Y1}Co_{Y1}O₂ (where, 0<Y1<1), etc.), lithium-manganese-cobalt-based oxide (e.g., LiCo_{1-Y2}Mn_{Y2}O₂ (where, 0<Y2<1), LiMn_{2-Z1}Co_{Z1}O₄ (where, 0 < Z1 < 2), etc.), lithium-nickel-manganese-cobalt-based oxide (e.g., Li(NiₚCo_{q}Mnᵣ)O₂ (where, 0 < p < 1, 0 < q < 1, 0 < r < 1, p+q+r=1) or Li(Niₚ₁Co_{q1}Mnᵣ₁)O₄ (where, 0 < p1 <2, 0 < q 1 < 2, 0 < r1 <2, p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2 and s2 are atomic fractions of each independent elements, wherein 0 < p2 < 1, 0 < q2 < 1, 0 < r2 < 1, 0 < s2 < 1, p2+q2+r2+s2=1), etc.), lithium iron phosphate (e.g., Li₁₊ₐFe₁₋ₓMₓ(PO_{4-b})X_{b} (where M is at least one selected from Al, Mg and Ti, X is at least one selected from F, S and N, and -0.5≤a≤+0.5, 0≤x≤0.5, 0≤b≤0.1), and any one thereof or a mixture of two or more thereof may be included.

Among these, the positive electrode active material includes lithium metal oxide containing lithium; and two or more transition metals selected from the group consisting of nickel, manganese, cobalt, and aluminum, wherein the lithium metal oxide may contain nickel in an amount of 50 mol % or more, or 60 to 99 mol %, or 70 to 95 mol % based on the total transition metal content excluding lithium. Such a lithium metal oxide may be represented, for example, by the following Formula 1:

[Formula 1] LiₓNiₐCo_{b}M¹_{c}M²_{d}O₂

wherein in Formula 1, M¹ may be one or more selected from Mn and Al, M² may be one or more selected from the group consisting of Zr, B, W, Mg, Ce, Hf, Ta, La, Ti, Sr, Ba, F, P and S, wherein 0.90≤x≤1.1, or 0.95≤x≤1.08, or 1.0≤x≤1.08, and 0.50≤a<1.0, or 0.60≤a≤0.99, or 0.70≤a≤0.95. Further, 0<b≤0.3, 0<c≤0.3, and 0≤d≤0.1.

The lithium metal oxide containing such a high content of nickel is used as a positive electrode active material, and this is combined with the negative electrode of one embodiment, so that the output, capacity characteristics, lifetime characteristics, etc. of the lithium-free secondary battery can be further improved.

The above-mentioned positive electrode active material may be included in an amount of 60 to 99% by weight, or 70 to 99% by weight, or 80 to 98% by weight, based on the total weight of the positive electrode active material layer.

Meanwhile the conductive material contained in the positive electrode active material layer is a component for further improving the conductivity of the positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such as polyphenylene derivatives, may be used. Among these, the conductive material includes conductive nanomaterials such as carbon nanotubes or carbon nanofibers, which can further lower the resistance and further enhance output characteristics of the lithium-free secondary battery.

Typically, the conductive material may be included in an amount of 1 to 20% by weight, or 1 to 15% by weight, or 1 to 10% by weight, based on the total weight of the positive electrode active material layer.

The binder selectively included in the positive electrode active material layer is a component that assists in the bonding between the positive electrode active material and the conductive material and in the bonding to the current collector. Examples of the binder may include polyvinylidene fluoride, polyvinyl alcohol, carboxymethylcellulose (CMC), starch, hydroxypropyl cellulose, regenerated cellulose, polyvinylpyrrolidone, polytetrafluoroethylene, polyethylene (PE), polypropylene, ethylene-propylene-diene monomer, sulfonated ethylene-propylene-diene monomer, nitrile-based rubber, styrenebutadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the lithium-free secondary battery of certain other embodiments further includes an electrolyte containing a non-aqueous organic solvent and a lithium salt.

The lithium salt contained in the electrolyte is used as a medium for transferring ions within a secondary battery. For example, the lithium salt may include Li⁺ as a cation, and may together include an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, ASF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include one or more selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBF₂(C₂O₄), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 0.4 to 6M, or at a concentration of 0.5M to 5M.

In more specific embodiments, the electrolyte may include the lithium salt at a relatively low concentration of 0.4M or more and less than 2M, or 0.5M to 1.5M, but may include the lithium salt at a high concentration of 2M to 6M, or 2.5M to 5.5M. By using an electrolyte containing such a high concentration of lithium salt, the output characteristics or the like of the secondary battery can be further improved.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include one or more selected from the group consisting of a carbonate-based solvent, an ether-based solvent, a nitrile-based solvent, a phosphate-based solvent, and a sulfone-based solvent. However, taking into consideration the stability of the lithium metal layer electrodeposited on the lithium electrodeposition induction layer, the non-aqueous organic solvent preferably includes a carbonate-based solvent or an ether-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the above-mentioned lithium-free secondary battery may further include a porous separator interposed between the positive electrode and the negative electrode.

Such a porous separator can be made from olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 µm, and the thickness may generally range from 5 to 300 µm, but are not limited thereto.

In addition, in certain other embodiments of the lithium-free secondary battery, the separator may be integrated with the electrolyte and interposed between the positive electrode and the negative electrode in the form of an electrolyte layer or an electrolyte film. In one embodiment, the electrolyte layer or the electrolyte film may be in a form including the lithium salt and the non-aqueous organic solvent in the polymer matrix, or in a form including a solid electrolyte. As the polymer matrix, a well-known polymer-based solid electrolyte or the like may be used.

The lithium-free secondary battery of certain embodiments described above may be a semi-solid battery using a combination of a liquid electrolyte and a solid electrolyte or an all-solid-state battery having a solid electrolyte layer, depending on the presence/absence of the electrolyte layer, the shape thereof, and the like.

Meanwhile, the lithium-free secondary battery of certain other embodiments can be prepared according to a conventional method in the art. For example, the lithium-free secondary battery can be prepared either by housing an electrode assembly including a positive electrode, a negative electrode and a separator in a case, and injecting and impregnating the above-mentioned electrolyte in the case, or by housing an electrode assembly including a positive electrode, a negative electrode, and an electrolyte layer in a case.

Such a lithium secondary battery can be applied not only to a battery cell used as power sources for small-sized devices, but can also be particularly suitably used as a unit battery in a battery module, which is a power source for medium-sized and large-sized devices.

Hereinafter, preferred examples of the invention, comparative examples, and experimental examples for evaluating them will be described. However, the following examples are only a preferred embodiment of the invention, and are not intended to limit the scope of the invention.

### Comparative Example 1:

A copper foil itself having a thickness of 9µm was used as the negative electrode for lithium-free secondary battery of Comparative Example 1.

### Comparative Example 2: Preparation of negative electrode for lithium-free secondary battery

A copper mesh having a wire diameter of 25µm and a mesh size of 300-400 mesh was used. In addition, an electrolytic cell including a working electrode containing the copper mesh, a counter electrode made from a copper foil having a thickness of 9µm, and an aqueous electrolyte containing copper sulfate at a concentration of 50 mM and sulfuric acid at a concentration of 200 mM was used.

In the electrolytic cell, the deposition of copper was performed on the copper mesh from the copper foil by applying a constant voltage of 2.4 V for 720 seconds. Through this deposition, a copper nanostructure in the form of nano-protrusions was formed on the copper mesh, which was used as the negative electrode for lithium-free secondary battery of Comparative Example 2.

### Examples 1 to 6: Preparation of negative electrode for lithium-free secondary battery

A copper mesh having a wire diameter of 25µm and a mesh size of 300-400 mesh was used. In addition, an electrolytic cell including a working electrode containing the copper mesh, a counter electrode containing a copper foil having a thickness of 9µm, and an aqueous electrolyte containing copper sulfate at a concentration of 50 mM and sulfuric acid at a concentration of 200 mM was used.

In the electrolytic cell, electrochemical etching was performed on the copper mesh by applying a constant current at a current density of 40 mA/cm². The etching was performed for 9 minutes, and copper ions were desorbed from the copper mesh. Then, under application of a voltage of 2.4 V, the re-deposition of copper was performed on the copper mesh from the copper foil for 2 minutes.

Subsequently, the sample of the porous copper layer on which the re-deposition was completed was placed on a quartz boat connected to a magnetic transporter, and the sample was placed in the center of a chamber of a tube furnace heated to 775°C, with 80% hydrogen (helium atmosphere) gas flowing, and then taken out to perform heat treatment. At this time, the heat treatment conditions were varied for each Example based on the heat treatment time for placing and taking out the sample, such as no heat treatment (Example 1), heat treatment for 3 minutes (Example 2), heat treatment for 6 minutes (Example 3), heat treatment for 12 minutes (Example 4), heat treatment for 24 minutes (Example 5), and heat treatment for 60 minutes (Example 6).

The electron microscope photographs of the porous copper layer formed by the heat treatment are shown in FIGS. 4a to 4f, respectively. Through the photographs, it was confirmed that a large number of copper nanostructures in the shape of nanorods or nanofibers were formed on the porous copper layers of Examples 1 to 6, and nanopores were defined by these nanostructures. In addition, it was confirmed that among Examples 1 to 6, a porous structure suitable for uniform electrodeposition of lithium metal was formed in Examples 2 to 4, and that when the heat treatment time was longer than this, the pores tended to become narrow due to aggregation between copper nanostructures.

Meanwhile, after the heat treatment, 20 nm of Al₂O₃ and 2 nm of Fe were deposited on one surface of the porous copper layer by irradiating with E-beam to form a metal catalyst layer. Then, while supplying 410 sccm of He, 100 sccm of ethylene gas, and 100 sccm of hydrogen gas onto the metal catalyst layer, the synthesis of carbon nanotubes was performed for 12 to 20 minutes in a tube furnace heated to 775°C where the heat treatment was performed.

Thereby, the negative electrodes for lithium-free secondary batteries of Examples 1 to 6 were prepared, respectively.

### Examples 7 to 9: Preparation of negative electrode for lithium-free secondary battery

The porous copper layer was manufactured by performing electrochemical etching and copper re-deposition in the same manner as in Examples 1 to 6.

Subsequently, the sample of the porous copper layer on which the re-deposition was completed was placed in the chamber of a tube furnace connected to a vacuum pump. The chamber was heated at a heating rate of 10°C/min while flowing 3.9% hydrogen gas (Ar base) to reach 400-600°C, and then maintained at that temperature for 1 hour. At this time, based on the heat treatment temperature of which the temperature of the sample was raised, heat treatment temperatures were varied for each Example, such as 400°C (Example 7), 500°C (Example 8), and 600°C (Example 9).

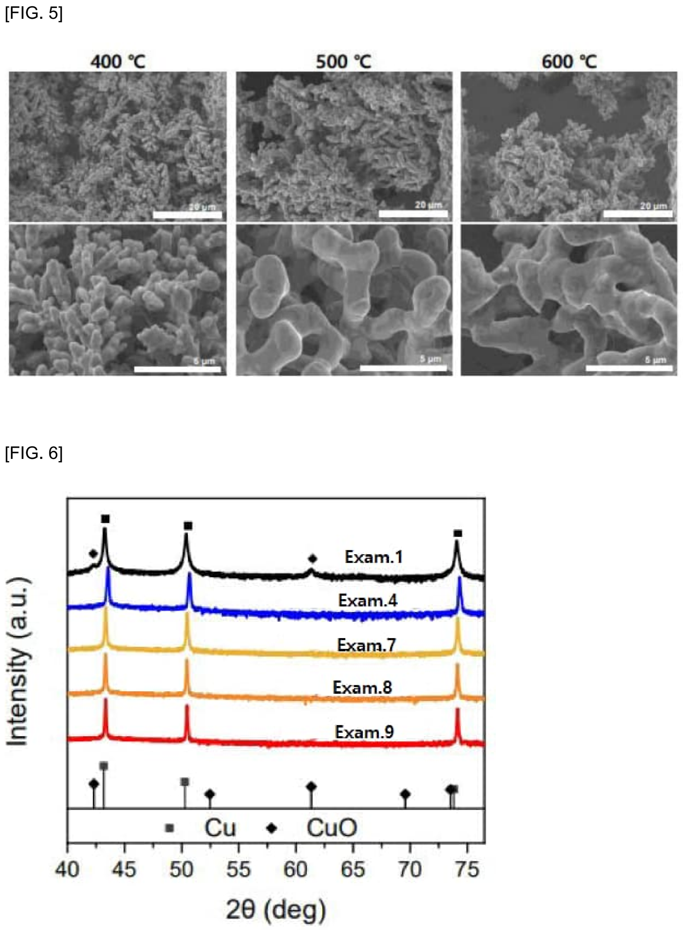

The electron microscope photographs of the porous copper layer formed by the heat treatment are shown in FIG. 5 for each heat treatment temperature. Through the photographs, it was confirmed that a large number of copper nanostructures in the shape of nanorods or nanofibers were formed on the porous copper layers of Examples 7 to 9, and that nanopores were defined by these nanostructures. In addition, it was confirmed that among Examples 7 to 9, a porous structure suitable for uniform deposition of lithium metal was formed in Example 8, and when the heat treatment temperature was lower than this (Example 7), the connection of the nanostructures was insufficient, and the porous structure was not sufficiently formed. On the contrary, in Example 9, where the heat treatment temperature was high, it was confirmed that the pores tended to become narrow due to aggregation between the copper nanostructures.

Additionally, the porous copper layers of Examples 1, 4, and 7 to 9 were analyzed by XRD, and the analysis results were shown in FIG. 6. Referring to FIG. 6, it was confirmed that in Example 1, where heat treatment was not performed, a peak derived from copper oxide was detected at 2θ of 60° to 63°, but in Examples 4, 7 to 9, where heat treatment was performed, the peak was not detected.

On the other hand, after the heat treatment was performed, carbon nanotubes were synthesized on the porous copper layers of Examples 7 to 9 in the same manner as in Examples 1 to 6, thereby preparing negative electrodes for lithium-free secondary batteries of Examples 7 to 9, respectively.

### Test Example 1: Evaluation of physical properties of negative electrode

The thickness of the negative electrodes of Comparative Examples 1, 2, and Example 4 was measured by cross-sectional observation using a scanning electron microscope (Hitachi, SU5000) and by using a thickness measuring device (Mitutoyo, 547-401A), and the mass per unit area was measured by using an ultra-precision scale (RADWAG, XA52.4Y) after cutting the negative electrodes into circles with a diameter of 19 mm using a disk puncher (Wellcos, WC-H125). The results of this evaluation are shown in Table 1 below. Additionally, the porosity of each negative electrode was calculated using the mass per unit area and thickness and the true density value of copper (8.95 g/cm³).

**[Table 1]**

| | Thickness (µm) | Porosity (%) | Mass per unit area (mg/cm²) |
|---|---|---|---|
| Comparative Example 1 | 9 | 0 | 8.9 |
| Comparative Example 2 | 70 | 54.6 | 28.4 |
| Example 4 | 15 | 62.8 | 5.02 |

Referring to Table 1, it was confirmed that the negative electrode of Example 4 not only has a developed porous three-dimensional microstructure, and thus exhibits a high porosity suitable for uniform lithium deposition, but also has a very thin thickness and low mass per unit area as compared to the negative electrode of Comparative Example 2. Throughout all of this, it was confirmed that a lithium-free secondary battery with a higher energy density can be provided by utilizing the negative electrode of Example 4.

### Test Example 2: Evaluation of resistance and galvanic corrosion of the negative electrode

Half cells were manufactured using the negative electrodes of Comparative Example 1, Example 1 and Example 4. The half cells were formed to include the negative electrode and a lithium foil as a counter electrode, and 75 µl of an electrolyte of 0.6 M LiBF₄ + 0.6 M LiBF₂(C₂O₄) in FEC/DEC (1:2 volume ratio). For these half cells, the charge transfer resistance and Ohmic resistance of each negative electrode were evaluated by EIS (Electrochemical Impedance Spectroscopy) analysis under the conditions of 10⁻³ to 10⁶ Hz and 50 mV, and the evaluation results are compared and shown in Table 2 below.

**[Table 2]**

| | Charge transfer resistance (Ω) | Ohmic resistance (Ω) |
|---|---|---|
| Comparative Example 1 | 520 | 8.25 |
| Example 1 | 34 | 9.84 |
| Example 4 | 136 | 8.05 |

Referring to Table 2, it was confirmed that the negative electrodes of Examples 1 and 4 exhibited lower resistance than Comparative Example 1 due to the formation of a porous three-dimensional microstructure. In addition, it was confirmed that the negative electrode of Example 4 exhibited a large charge transfer resistance and a small Ohmic resistance compared to those of Example 1. This is because the copper oxide having lithium affinity in Example 4 was reduced and removed during heat treatment, and it was confirmed that the negative electrode of Example 4 exhibited improved conductivity than that of Example 1.

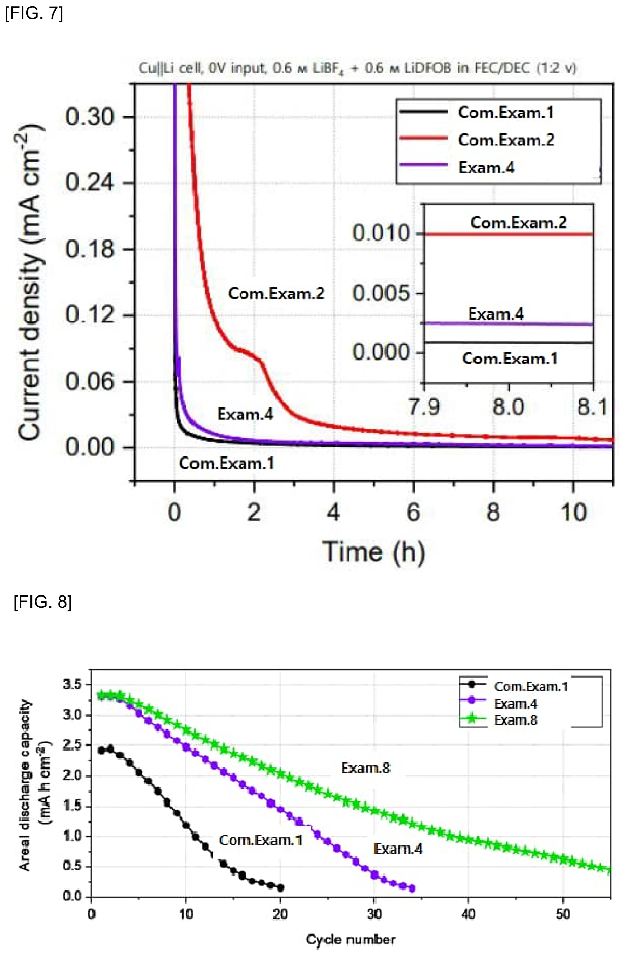

Additionally, the same half-cells as described above were manufactured using the negative electrode of Comparative Example 1, Comparative Example 2 and Example 4, and the current density over time was evaluated while conducting galvanic charge and discharge using these half-cells. The evaluation results are shown in FIG. 7.

Through the change mode of current density over time shown in FIG. 7, it was confirmed that the negative electrode of Example 4 reduces galvanic corrosion by about 75% compared to the negative electrode of Comparative Example 2, which corresponds to the existing negative electrode with an introduced three-dimensional porous microstructure.

### Test Example 3: Evaluation of capacity characteristics per cycle

Batteries were manufactured using the negative electrodes of Comparative Example 1, Example 4 and Example 8. Such batteries were formed to include the negative electrode and a positive electrode including NCM811 (LiNi_{0.8}Co_{0.1}Mn_{0.1}O₂) as a positive electrode active material, a polyethylene separator, and 75 µl of an electrolyte of 0.6M LiBF₄ + 0.6M LiBF₂(C₂O₄) in FEC/DEC (1:2 volume ratio).

For these batteries, the change in discharge capacity per cycle was evaluated while charging and discharging under the condition of 4 mAh·cm⁻² (0.5 C, cut-off voltage: 4.5 V), and the evaluation results are shown in FIG. 8.

Referring to FIG. 8, it was confirmed that the lithium-free secondary battery including the negative electrodes of Examples exhibit superior capacity per cycle compared to the battery including the negative electrodes of Comparative Examples.

## Claims

1. A negative electrode for lithium-free secondary battery, comprising:
a porous metal layer having a three-dimensional microstructure; and
a conductive carbon nanostructure formed on the porous metal layer,
wherein the porous metal layer comprises a metal mesh layer in which a fibrous metal having a diameter of a micron scale forms a network structure, and a metal nanostructure formed on the fibrous metal, and
wherein at least some of the metal nanostructures are connected to each other to define a plurality of pores on the porous metal layer.

2. The negative electrode for lithium-free secondary battery of claim 1, further comprising a conductive metal layer supporting the porous metal layer.

3. The negative electrode for lithium-free secondary battery of claim 1, wherein the porous metal layer comprises copper.

4. The negative electrode for lithium-free secondary battery of claim 1, wherein the metal nanostructure comprises a metal nanorod or a metal nanofiber.

5. The negative electrode for lithium-free secondary battery of claim 1, wherein the conductive carbon nanostructure comprises a carbon nanotube.

6. The negative electrode for lithium-free secondary battery of claim 1, wherein the porous metal layer has a thickness 10 to 30µm.

7. The negative electrode for lithium-free secondary battery of claim 1, wherein the porous metal layer has a mass per unit area of 4.0 to 10.0 mg/cm².

8. The negative electrode for lithium-free secondary battery of claim 4, wherein the fibrous metal has a diameter of 5 to 15µm, and the metal nanorod or metal nanofiber has a diameter of 100 to 700 nm.

9. The negative electrode for lithium-free secondary battery of claim 1, wherein the porous metal layer has a porosity of 55 to 70%.

10. The negative electrode for lithium-free secondary battery of claim 1, wherein the porous metal layer is made from a conductive metal in a reduced form, and is substantially free of an oxide of the conductive metal.

11. The negative electrode for lithium-free secondary battery of claim 1, further comprising a catalyst layer comprising aluminum or iron and formed on the porous metal layer, wherein the conductive carbon nanostructure is formed on the catalyst layer.

12. A method for preparing the negative electrode for lithium-free secondary battery of claim 1, the method comprising the steps of:
performing an electrochemical etching on a metal mesh containing a conductive metal;
re-depositing the conductive metal on the metal mesh on which the electrochemical etching has been performed, thereby forming a porous metal layer in which a metal nanostructure is formed on a fibrous metal having a network structure; and
forming a carbon nanostructure while supplying a gaseous carbon source including an aliphatic hydrocarbon and a reducing gas in the presence of a metal catalyst.

13. The method for preparing the negative electrode for lithium-free secondary battery of claim 12, wherein the metal mesh comprises a metal wire having a diameter of 20 to 40 um, and has a mesh size of 200 to 500 mesh.

14. The method for preparing the negative electrode for lithium-free secondary battery of claim 12, wherein the electrochemical etching and the re-depositing the conductive metal are sequentially performed in the same electrolytic cell, comprising:
a working electrode containing the metal mesh,
a counter electrode containing the same conductive metal as the metal mesh, and
an electrolyte containing ions of the conductive metal and an acid.

15. The method for preparing the negative electrode for lithium-free secondary battery of claim 12, wherein the electrochemical etching is performed under application of a constant current of 30 to 60 mA/cm².

16. The method for preparing the negative electrode for lithium-free secondary battery of claim 12, wherein the re-deposition of the conductive metal is performed under application of a voltage of 2.2 V to 2.7 V.

17. The method for preparing the negative electrode for lithium-free secondary battery of claim 12, further comprising heat-treating the metal mesh or porous metal layer in the presence of hydrogen gas before the electrochemical etching or after the re-deposition of the conductive metal.

18. The method for preparing the negative electrode for lithium-free secondary battery of claim 17, wherein the heat treatment is performed after the re-deposition of the conductive metal, and the formation of the carbon nanostructure is continuously performed in the same reactor in which the heat treatment has been performed.

19. The method for preparing the negative electrode for lithium-free secondary battery of claim 17, wherein the heat treatment is performed at a temperature of 300 to 800°C for 5 minutes to 1.5 hours.

20. The method for preparing the negative electrode for lithium-free secondary battery of claim 12, wherein the metal catalyst comprises aluminum oxide and iron.

21. The method for preparing the negative electrode for lithium-free secondary battery of claim 12, wherein the gaseous carbon source comprises ethylene gas, and the reducing gas comprises hydrogen gas.

22. A lithium-free secondary battery comprising:
a positive electrode containing a positive electrode active material;
the negative electrode of claim 1; and
a separator or electrolyte layer interposed between the positive electrode and the negative electrode.

23. The lithium-free secondary battery of claim 22, further comprising a lithium metal layer that is electrodeposited on the porous metal layer of the negative electrode by charging the lithium-free secondary battery.
